# EUROPEAN PATENT APPLICATION

(11) **EP 4 358 523 A1**
(43) Date of publication of application: **24.04.2024**
(21) Application number: 22306585.5
(22) Date of filing: 19.10.2022
(51) Int. Cl.: H04N 21/258, H04N 21/239, H04N 21/437

(54) **METHODS FOR MULTIMEDIA DATA DELIVERY AND APPARATUSES FOR IMPLEMENTING THE SAME**

(71) Applicant: ATEME, 78140 Velizy Villacoublay (FR)
(72) Inventor: BIATEK, Thibaud, 78000 VERSAILLES (FR); BURDINAT, Christophe, 69003 LYON (FR)
(74) Representative: Plasseraud IP

(57) **Abstract**

A method for delivering multimedia data to a user device of a multimedia data delivery system is proposed, which comprises, at a server device of the multimedia data delivery system, receiving, from the user device, a query message requesting service list data, wherein the query message includes a parameter for querying custom service list data in relation to a user of the user device, and upon receiving the query message, generating a response message for transmission to the user device which includes a list of multimedia services customized for the user based on the parameter.

## Description

The present disclosure relates to the field of multimedia data delivery.

Media consumption is increasingly shifting from traditional broadcast TV (over-the-air, satellite, and cable) to so-called over-the-top (OTT) streaming over the public Internet. The antennas and set-top boxes associated with traditional TVs are replaced by software media players that run on smartphones, tablets, PCs, connected TVs and game consoles.

Free Ad-Supported Streaming Television (FAST) designates a set of linear streaming television services offered to users for free (without a subscription), with content being personalized for the targeted user. FAST is funded by advertising, so that users of FAST receive advertisement content in addition to their streamed multimedia content.

FAST channels allow content providers to distribute multimedia content in linear channels that are personalized to users. A live personalized channel viewing can therefore be offered to users of FAST channels.

It would be advantageous to improve the management of FAST services, so as to widen the technical frameworks in which distribution of personalized multimedia content distribution services, such as for example through FAST channels, may be offered and delivered.

There is therefore a need for providing an improved multimedia data delivery scheme and apparatus and software implementing the same that address at least some of the above-described drawbacks and shortcomings of the conventional technology in the art.

It is an object of the present subject disclosure to provide an improved multimedia data delivery scheme and apparatuses implementing the same.

Another object of the present subject disclosure is to provide an improved multimedia data delivery scheme and apparatuses implementing the same for alleviating the above-described drawbacks and shortcomings of conventional multimedia data delivery schemes.

Yet another object of the present subject disclosure is to provide an improved scheme for distribution of personalized multimedia content distribution services, such as for example through FAST channels.

Yet another object of the present subject disclosure is to provide an improved multimedia data delivery scheme in which support for FAST services may be implemented, and apparatuses implementing the same.

To achieve these objects and other advantages and in accordance with the purpose of the present subject disclosure, as embodied and broadly described herein, in one aspect of the present subject disclosure, a computer-implemented method for delivering multimedia data to a user device of a multimedia data delivery system is proposed, which comprises, by a server device of the multimedia data delivery system: receiving, from the user device, a query message requesting service list data, wherein the query message includes a parameter for querying custom service list data in relation to a user of the user device; upon receiving the query message, generating a response message which includes a list of multimedia services customized for the user based on the parameter.

In one or more embodiments, the proposed method may further comprise: transmitting, by the server device, to the user device, the response message.

According to another aspect of the present subject disclosure, a computer-implemented method for delivering multimedia data to a user device of a multimedia data delivery system is proposed, which comprises, by a server device of the multimedia data delivery system: receiving, from the user device, a query message requesting service list data, wherein the query message includes (a value of) a parameter for querying custom service list data in relation to a user of the user device, and upon receiving the query message, generating a response message to be transmitted to the user device for responding to the query message, wherein the response message includes a list of multimedia services customized for the user based on the parameter.

According to yet another aspect of the present subject disclosure, a computer-implemented method for delivering multimedia data to a user device of a multimedia data delivery system is proposed, which comprises, by a server device of the multimedia data delivery system: receiving, from the user device, a query message requesting service list data, wherein the query message includes a parameter for querying custom service list data in relation to a user of the user device; upon receiving the query message, generating a response message which includes a list of multimedia services customized for the user based on the parameter; and transmitting, to the user device, the response message.

According to yet another aspect of the present subject disclosure, a computer-implemented method for managing delivery of multimedia data to a user device of a multimedia data delivery system is proposed, which comprises, by the user device: generating a query message requesting service list data, wherein the query message includes a parameter for querying custom service list data in relation to a user of the user device; and transmitting the query message to a server device of the multimedia data delivery system.

According to yet another aspect of the present subject disclosure, a computer-implemented method for managing delivery of multimedia data to a user device of a multimedia data delivery system is proposed, which comprises, by the user device: generating a query message requesting service list data, wherein the query message includes a parameter for querying custom service list data in relation to a user of the user device; transmitting the query message to a server device of the multimedia data delivery system; and receiving, from the server device, a response message which includes a list of multimedia services customized for the user.

The proposed scheme advantageously allows querying, at a user device of a multimedia data delivery system, a service list data function implemented by a server device of the multimedia data delivery system, for a custom list of services in relation with a user of the user device.

As another advantage of the proposed scheme, a Digital Video Broadcast-Internet (DVB-I) framework may be configured to implement the proposed scheme, so that, thanks to the proposed scheme, a DVB-I service may include personalized data or services reserved for one or more of specific users, user profiles, and group of users. Personalization may therefore be enabled in a DVB-I framework through use of a customization parameter included in a query message requesting service list data as proposed according to embodiments of the present subject disclosure.

For example, custom service list data (e.g. a custom list of services) may be queried from a DVB-I server (for example implementing one or more of a DVB-I Service List Registry (SLR) function and a DVB-I Service List Server (SLS) function) using a DVB-I query which includes a parameter for querying custom service list data in relation to a user of a user device that implements a DVB-I client function.

The proposed scheme further advantageously allows including the management of a FAST services or channels offering into a DVB-I framework, thus enriching the support provided by DVB-I, and benefiting from the service management framework designed in the DVB-I specifications.

In particular, the proposed scheme advantageously allows managing the signaling of personalized FAST channels using a DVB-I framework.

In one or more embodiments of the proposed methods, the parameter may include an identifier related to the user device. This advantageously allows requesting, at the user device, and generating, at the server device, a list of multimedia services customized for the user based on the identifier related to the user device.

Various types of customization or personalization may be achieved through the use of various types of identifier related to the user device. For example, in some embodiments, the parameter may include a Universally Unique Identifier, UUID. In some embodiments, the parameter may include a group identifier. In some embodiments, the parameter may include a user device identifier. In some embodiments, the parameter may include a user profile identifier.

In one or more embodiments, the multimedia data delivery system includes a Digital Video Broadcasting - Internet, DVB-I, system, and the query message may be a DVB-I Service List Discovery Query message to query from a DVB-I Service List Registry function a personalized list of Service List Entry Points, a DVB-I Service List Query message to query from a DVB-I Service List Server a personalized Service List, or a DVB-I Content Guide Query message to query from a DVB-I Content Guide Server personalized Content Guide Data.

In one or more embodiments, the user device may implement a Digital Video Broadcasting - Internet, DVB-I, client, and the query message may be a DVB-I query. In some embodiments, the query message may be a DVB-I Service List Query message, a Service List Discovery Query message, or a Content Guide Query message.

In one or more embodiments, the server device may implement a Digital Video Broadcasting - Internet, DVB-I, Service List Registry, SLR, function, a DVB-I Service List Server, SLS, function, or a Content Guide Server, CGS, function, and the response message may be a response message to a DVB-I Service List Discovery Query issued by a DVB-I client to the SLR function, a response message to a DVB-I Service List Query issued by the DVB-I client to the SLS function, or a response message to a DVB-I Content Guide Query issued by the DVB-I client to the CGS function, respectively.

In another aspect of the present subject disclosure, an apparatus is proposed, which comprises a processor, and a memory operatively coupled to the processor, wherein the apparatus is configured to perform a method according to one or more embodiments proposed in the present subject disclosure.

In yet another aspect of the present subject disclosure, a non-transitory computer-readable medium encoded with executable instructions which, when executed, causes an apparatus comprising a processor operatively coupled with a memory, to perform a method according to one or more embodiments proposed in the present subject disclosure, is proposed.

For example, in some embodiments, the present subject disclosure provides a non-transitory computer-readable medium encoded with executable instructions which, when executed, causes an apparatus comprising a processor operatively coupled with a memory, to to perform a method for delivering multimedia data to a user device of a multimedia data delivery system which comprises, at a server device of the multimedia data delivery system: receiving, by the processor, from the user device, a query message requesting service list data, wherein the query message includes a parameter for querying custom service list data in relation to a user of the user device; and upon receiving the query message, generating, by the processor, a response message for transmission to the user device which includes a list of multimedia services customized for the user based on the parameter.

As another example, in some embodiments, the present subject disclosure provides a non-transitory computer-readable medium encoded with executable instructions which, when executed, causes an apparatus comprising a processor operatively coupled with a memory, to to perform a method for managing delivery of multimedia data to a user device of a multimedia data delivery system which comprises, at the user device: generating, by the processor, a query message requesting service list data, wherein the query message includes a parameter for querying custom service list data in relation to a user of the user device; and transmitting, by the processor, the query message to a server device of the multimedia data delivery system.

In yet another aspect of the present subject disclosure, a computer program product comprising computer program code tangibly embodied in a computer readable medium, said computer program code comprising instructions to, when provided to a computer system and executed, cause said computer to perform a method according to an embodiment proposed in the present subject disclosure, is proposed.

In another aspect of the present subject disclosure, a data set representing, for example through compression or encoding, a computer program as proposed in the present subject disclosure, is proposed.

It should be appreciated that the present invention can be implemented and utilized in numerous ways, including without limitation as a process, an apparatus, a system, a device, and as a method for applications now known and later developed. These and other unique features of the system disclosed herein will become more readily apparent from the following description and the accompanying drawings.

### Brief description of the drawings

The present subject disclosure will be better understood and its numerous objects and advantages will become more apparent to those skilled in the art by reference to the following drawings, in conjunction with the accompanying specification, in which:
Figure 1a shows an exemplary multimedia data delivery system that may be used for implementing one or more embodiments of the present subject disclosure;
Figure 1b shows a schematic diagram illustrating an exemplary request-response data communication exchange between a server and a client according to one or more embodiments of the present subject disclosure;
Figure 2a is a block schematic diagram illustrating an exemplary method for delivering multimedia data to a user device according to one or more embodiments of the present subject disclosure;
Figure 2b is a block schematic diagram illustrating an exemplary method for delivering multimedia data to a user device according to one or more embodiments of the present subject disclosure;
Figure 2c is a schematic diagram illustrating an exemplary request-response data communication exchange between a server and a client according to one or more embodiments of the present subject disclosure;
Figure 2d is a schematic diagram illustrating an exemplary request-response data communication exchange between a DVB-I Service List Server and a DVB-I Client according to embodiments of the present subject disclosure;
Figure 2e is a schematic diagram illustrating an exemplary request-response data communication exchange between a DVB-I Service List Registry function and a DVB-I Client according to one or more embodiments of the present subject disclosure;
Figure 3a illustrates an exemplary Free Ad-Supported Streaming TV (FAST) combined with DVB-I use case according to one or more embodiments of the present subject disclosure;
Figure 3b illustrates another exemplary FAST combined with DVB-I use case according to one or more embodiments of the present subject disclosure;
Figure 3c illustrates another exemplary DVB-I use case according to one or more embodiments of the present subject disclosure;
Figure 4a illustrates an exemplary server apparatus according to one or more embodiments.
Figure 4b illustrates an exemplary client apparatus according to one or more embodiments.

### Description of embodiments

For simplicity and clarity of illustration, the drawing figures illustrate the general manner of construction, and descriptions and details of well-known features and techniques may be omitted to avoid unnecessarily obscuring the discussion of the described embodiments of the invention. Additionally, elements in the drawing figures are not necessarily drawn to scale. For example, the dimensions of some of the elements in the figures may be exaggerated relative to other elements to help improve understanding of embodiments of the present invention. Certain figures may be shown in an idealized fashion in order to aid understanding, such as when structures are shown having straight lines, sharp angles, and/or parallel planes or the like that under real-world conditions would likely be significantly less symmetric and orderly. The same reference numerals in different figures denote the same elements, while similar reference numerals may, but do not necessarily, denote similar elements.

In addition, it should be apparent that the teaching herein can be embodied in a wide variety of forms and that any specific structure and/or function disclosed herein is merely representative. In particular, one skilled in the art will appreciate that an aspect disclosed herein can be implemented independently of any other aspects and that several aspects can be combined in various ways.

The present disclosure is described below with reference to devices, functions, engines, block diagrams and flowchart illustrations of the methods, devices, systems, and computer program according to one or more exemplary embodiments. Each described device, function, engine, block of the block diagrams and flowchart illustrations can be implemented in hardware, software, firmware, middleware, microcode, or any suitable combination thereof. If implemented in software, the devices, functions, engines, blocks of the block diagrams and/or flowchart illustrations can be implemented by computer program instructions or software code, which may be stored or transmitted over a computer-readable medium, or loaded onto a general purpose computer, special purpose computer or other programmable data processing apparatus to produce a machine, such that the computer program instructions or software code which execute on the computer or other programmable data processing apparatus, create the means for implementing the functions described herein.

Embodiments of computer-readable media includes, but are not limited to, both computer storage media and communication media including any medium that facilitates transfer of a computer program from one place to another. As used herein, a "computer storage media" may be any physical media that can be accessed by a computer or a processor. In addition, the terms "memory" and "computer storage media" include any type of data storage device, such as, without limitation, a hard drive, a flash drive or other flash memory devices (e.g. memory keys, memory sticks, key drive), CD-ROMs or other optical data storage devices, DVDs, magnetic disk data storage devices or other magnetic data storage devices, data memory components, RAM, ROM and EEPROM memories, memory cards (smart cards), solid state drive (SSD) memories, and any other form of medium able to be used to transport or store or memorize data or data structures able to be read by a computer processor, or a combination thereof. Furthermore, various forms of computer-readable media may transmit or carry instructions to a computer, such as a router, a gateway, a server, or any data transmission equipment, whether this involves wired transmission (via coaxial cable, optical fibre, telephone wires, DSL cable or Ethernet cable), wireless transmission (via infrared, radio, cellular, microwaves) or virtualized transmission equipment (virtual router, virtual gateway, virtual tunnel end, virtual firewall). According to the embodiments, the instructions may comprise code in any computer programming language or computer program element, such as, without limitation, the languages of assembler, C, C++, Visual Basic, HyperText Markup Language (HTML), Extensible Markup Language (XML), HyperText Transfer Protocol (HTTP), Hypertext Preprocessor (PHP), SQL, MySQL, Java, JavaScript, JavaScript Object Notation (JSON), Python, and bash scripting.

Unless specifically stated otherwise, it will be appreciated that throughout the following description discussions utilizing terms such as processing, computing, calculating, determining, or the like, refer to the action or processes of a computer or computing system, or similar electronic computing device, that manipulate or transform data represented as physical, such as electronic, quantities within the registers or memories of the computing system into other data similarly represented as physical quantities within the memories, registers or other such information storage, transmission or display devices of the computing system.

The terms "comprise," "include," "have," and any variations thereof, are intended to cover a non-exclusive inclusion, such that a process, method, article, or apparatus that comprises a list of elements is not necessarily limited to those elements, but may include other elements not expressly listed or inherent to such process, method, article, or apparatus.

Additionally, the word "exemplary" is used herein to mean "serving as an example, instance, or illustration". Any embodiment or design described herein as "exemplary" is not necessarily to be construed as preferred or advantageous over other embodiments or designs. The terms "in particular", "for example", "example", "typically" are used in the present description to denote examples or illustrations of non-limiting embodiments that do not necessarily correspond to preferred or advantageous embodiments with respect to other possible aspects or embodiments.

The terms "operationally coupled", "coupled", "mounted", "connected" and their various variants and forms used in the present description refer to couplings, connections and mountings that may be direct or indirect, and comprise in particular connections between electronic equipment or between portions of such equipment that allow operations and modes of operation as described in the present description. In addition, the terms "connected" and "coupled" are not limited to physical or mechanical connections or couplings. For example, an operational coupling may include one or more wired connection(s) and/or one or more wireless connection(s) between two or more items of equipment that allow simplex and/or duplex communication links between the equipment or portions of the equipment. According to another example, an operational coupling or a connection may include a wired-link and/or wireless coupling for allowing data communications between a server of the proposed system and another item of equipment of the system.

"Server" or "platform" in the present subject disclosure means any (virtualized or non-virtualized) point of service or computer device or system performing data processing operations, one or more databases, and/or data communication functions. For example, and without limitation, the term "server" or the term "platform" may refer to a physical processor operationally coupled to associated communication, database and data storage functions, or refer to a network, a group, a set or a complex of processors and associated data storage and networking equipment, and to an operating system and one or more database system(s) and application software supporting the services and functions provided by the server. A server or platform may be configured to operate in or as part of a cloud computing environment. A computer device or system may be configured so as to send and receive signals, via wireless and/or wired transmission networks(s), or be configured so as to process and/or store data or signals, and may therefore operate as a server. Equipment configured so as to operate as a server may thus include, by way of non-limiting example, dedicated servers mounted on a rack, cloud-based servers, desktop computers, laptop computers, service gateways (sometimes called "box" or "home gateway"), multimedia decoders (sometimes called "set-top boxes"), integrated equipment combining various functionalities, such as two or more of the abovementioned functionalities. The servers may vary greatly in terms of their configuration or their capabilities, but a server will generally include one or more central processing unit(s) and a memory. A server may also include one or more item(s) of mass memory equipment, one or more electric power supply/supplies, one or more wireless and/or wired network interface(s), one or more input/output interface(s), one or more operating system(s), such as Windows Server, Mac OS X, Unix, Linux, FreeBSD, or an equivalent.

The terms "application," "program," or "application program" (AP) and their variants ("app", "web app", etc.) as used in the present description correspond to any tool that operates and is operated by way of a computer in order to provide or execute one or more function(s) or task(s) for a user or another application program. In order to interact with an application program and control it, a user interface may be provided on the equipment on which the application program is implemented. For example, a graphical user interface (or GUI) may be generated and displayed on a screen of the user equipment, or an audio user interface may be played back to the user using a speaker, a headset or an audio output.

The terms "multimedia content" as used in the present description correspond to any audio and/or video or audiovisual content, with or without closed captions, open captions, subtitles, timed text, visual descriptors, interactive graphic interfaces, and any combination thereof.

In the present description, the terms "real-time" distribution, distribution "in linear mode", distribution "in linear TV mode", distribution "in dynamic mode" and "live" distribution or distribution "in live mode" are used interchangeably to denote the distribution in live mode or dynamic mode of multimedia content in a content distribution system to user devices, comprising in particular the distribution of the content as it is generated, as opposed to distributing content previously generated, upon an access request from a user (distribution upon an access request or "static" distribution or distribution in static mode), such as for example content recorded on a server and made available to users by a video on demand (VOD) service. Multimedia content, such as for example carried by a FAST channel, may also have been previously encoded, and may be made available for distribution in linear mode to user devices on a multimedia content database.

In the present description, the terms "live content" or "live channel" are used interchangeably to denote or refer to corresponding content, for example multimedia content, of a multimedia content stream, that is distributed, for example using an Over-The-Top (OTT) distribution mode, in dynamic mode (as opposed to the static distribution mode). Live content will typically be generated by a television station, or by any type of television medium, and may also be distributed on a multimedia content broadcast network, in addition to being made available on content servers in an OTT distribution system. In some embodiments, a live channel, such as, for example, a FAST channel, may be generated from a main multimedia content flow distributed in broadcast (e.g. DVB-T/T2) combined with personalization items (e.g. personalized advertisement multimedia content) inserted in the main multimedia content flow and delivered over IP networks (in broadband).

In the present description, the terms "client", "user device", "client device", "viewing device", and "client unit" are used interchangeably to denote any type of user equipment (such as, without limitation, any computer device, smartphone, tablet, personal computer, laptop, television set, etc.) implemented by one or more items of software, one or more items of hardware, or a combination or one or more items of software and one or more items of hardware, configured to use multimedia content distributed in a multimedia data delivery system, which may in some embodiments implement one or more of generating a query message according to embodiments of the present subject disclosure, and receiving responses to such query message. A user device may typically embed a middleware/operating system on which a player is implemented. In particular, in embodiments using a DVB-I framework, a user device may typically implement a DVB-I Client (for example through its player) as defined in the DVB-I specifications and standards.

The terms "network" and "communication network" as used in the present description refer to one or more data links that may couple or connect possibly virtualized equipment so as to allow electronic data to be transported between computer systems and/or modules and/or other devices or electronic equipment, such as between a server and a user device or other types of devices, including between wireless devices that are coupled or connected via a wireless network, for example. A network may also include a mass memory for storing data, such as a NAS (network attached storage), a SAN (storage area network) or any other form of computer-readable or machine-readable medium, for example. A network may comprise, in full or in part, the Internet, one or more local area networks (LAN), one or more wide area networks (WAN), wired connections, wireless connections, cellular connections or any combination of these various networks. Similarly, subnetworks may use various architectures or conform with or be compatible with various protocols and interoperate with larger networks. Various types of equipment may be used to make various architectures or various protocols interoperable. For example, a router may be used to provide a communication link or a data link between two LANs that would otherwise be separate and independent.

The DVB Project is an industry-led consortium which develops a suite of open and interoperable specifications for the global delivery of digital media and broadcast services, known as the suite of DVB ("Digital Video Broadcast") specifications. DVB specifications cover all aspects of digital television and include DVB-Internet (DVB-I) specifications for offering standard-based solutions for the delivery of television services (live, linear and on-demand services) to internet connected devices. DVB-I can be used by a wide range of television service providers, including terrestrial broadcasters, satellite operators, cable operators, and OTT service providers.

The DVB-I standards are based on related technical specifications typically referred as BlueBooks. The DVB-I specifications provide a data format that is compatible with a large variety of devices, running from a traditional TV set and a set-top box to smartphones, tablets and laptops, thereby specifying a user interface through which common content can be provided to any internet-connected device. Included in the set of DVB-I technical specifications is the The DVB-I specification entitled "DVB-I Service Discovery - Service Discovery and Programme Metadata for DVB-I". This specification defines signalling of linear TV or radio services and content that are delivered over broadband, access to linear TV services that are delivered by broadband in a way that is consistent with their access to linear TV services delivered by RF-based DVB technologies, the metadata and mechanisms to present electronic programme guides, the integration of linear services delivered by the RF-based DVB tuner and linear services delivered by broadband into a single coherent offering that is accessed through a single consistent UI, and a method for national TV regulators or their representatives, operators and trademark licensors to offer a list of trusted/legitimate/authorized/regulated services. Its corresponding latest published standard is ETSI TS 103 770 V1.1.1, dated November 2020, while its corresponding latest BlueBook is the DVB Document A177 Rev.4 (Interim draft TS 103 770 V.1.2.1) entitled "Service Discovery and Programme Metadata for DVB-I," dated September 2022. This specification document defines *inter alia* internet-centric mechanisms to signal and discover linear television services, whether delivered over IP networks (broadband) or through broadcast mechanisms. Further details regarding this specification and corresponding standard may be found at the following URL: https://dvb.org/?standard=service-discovery-and-programme-metadata-for-dvb-i.

The proposed methods may be implemented by any user device at one end, and any server device at the other end, of a multimedia data delivery system configured for exchanging service list data through one or more communication networks, for example in a client-server framework, through one or more client-server exchanges, such as, for example, a DVB-I client implemented in a user device and a DVB-I server (e.g. implementing a Service List Registry (SLR) function or a Service List Server (SLS) function) compliant with DVB-I specifications or standards, whether in their existing versions and/or their evolutions, as the case may be adapted for implementing one or more embodiments of the proposed methods.

Although parts of the following description focus on embodiments of the present subject disclosure in a DVB-I framework, it will be appreciated by those having ordinary skill in the relevant art that any suitable service discovery framework, or multimedia service signaling framework, may be used in place of the DVB-I framework which is given by way of example only.

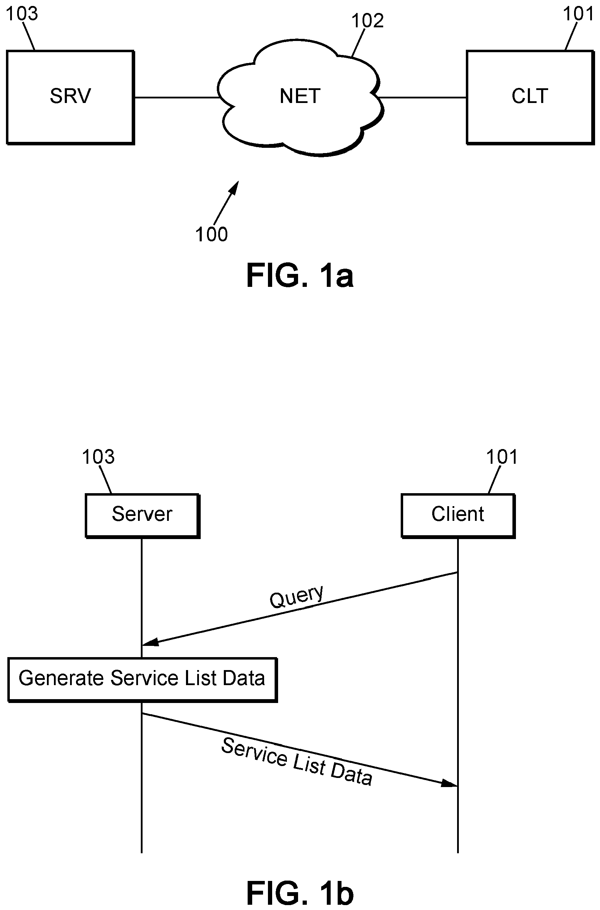

Fig. 1a illustrates an exemplary multimedia data delivery system (100) according to embodiments of the present subject disclosure.

Shown on Fig. 1a is a multimedia data delivery system (100) that comprises a server device (103) and a user device (101) which are configured for exchanging data through one or more data communication networks (102), at least one of which may be an Internet Protocol (IP) network.

In one or more embodiments, the user device (101) may be a device implementing a client function with respect to a server function implemented in the server device (103).

Depending on the embodiment, each of the user device (101) and server device (103) may be implemented in software, hardware, or as a combination of software and hardware.

In one or more embodiments, the server device (103) and the user device (101) may be configured to exchange data using the HyperText Transfer Protocol (HTTP) protocol. For example, the server device (103) may comprise a HTTP server configured for receiving HTTP requests issued by the user device (101), and for responding to such HTTP requests, and the user device (101) may comprise a HTTP client configured for generating HTTP requests and transmitting such HTTP requests to the server device (103). In such embodiments, the user device (101) and the server device (103) may each be configured to operate as a HTTP endpoint.

In one or more embodiments, the user device (101) may implement a DVB-I client function, and the server device (103) may implement one or more DVB-I server functions including one or more of a DVB-I Service List Registry (SLR) function and a DVB-I Service List Server (SLS) function.

Fig. 1b is a schematic diagram of a request-response data communication exchange between a server and a client according to embodiments of the present subject disclosure.

As shown on Fig. 1b, the data communication between the server and the client may for example take place between the user device (101) and the server device (103) illustrated on Fig. 1a.

As shown on Fig. 1b, in one or more embodiments, the user device (101) may send to the server device (103) a request message ("Query"), for example in the form of a HTTP request. The server device (103) may process the request and, in some embodiments, send Service List Data to the user device (101) in response to the request, for example in the form of a HTTP response.

In one or more embodiments, the request message may comprise a query message requesting service list data, the query message including a parameter for querying custom service list data in relation to a user of the user device (101).

In one or more embodiments, the Service List Data may be comprised in a response message, and include a list of multimedia services customized for the user based on the parameter.

In one or more embodiments, a DVB-I framework may be used for implementing the present subject disclosure.

For example, in some embodiments, the user device (101) may implement a DVB-I client function, and the server device (103) may implement one or more DVB-I server functions including one or more of a DVB-I SLR function and a DVB-I SLS function, as specified in the document "DVB-I Bluebook A177r4", dated September 2022, as the case may be adapted for implementing one or more embodiments of the proposed methods. In such embodiments, the request may include a DVB-I query (such as, for example, a Service List Query or a Service List Discovery Query) issued by the DVB-I client, and the response message may be returned, depending on the embodiment, by the DVB-I SLR and may include a list of Service List Entry Points in response to a Service List Discovery Query, or by the DVB-I SLS and may include an Aggregated Service List or Service List, as described in the document "DVB-I Bluebook A177r4", dated September 2022, as the case may be adapted for implementing one or more embodiments of the proposed methods.

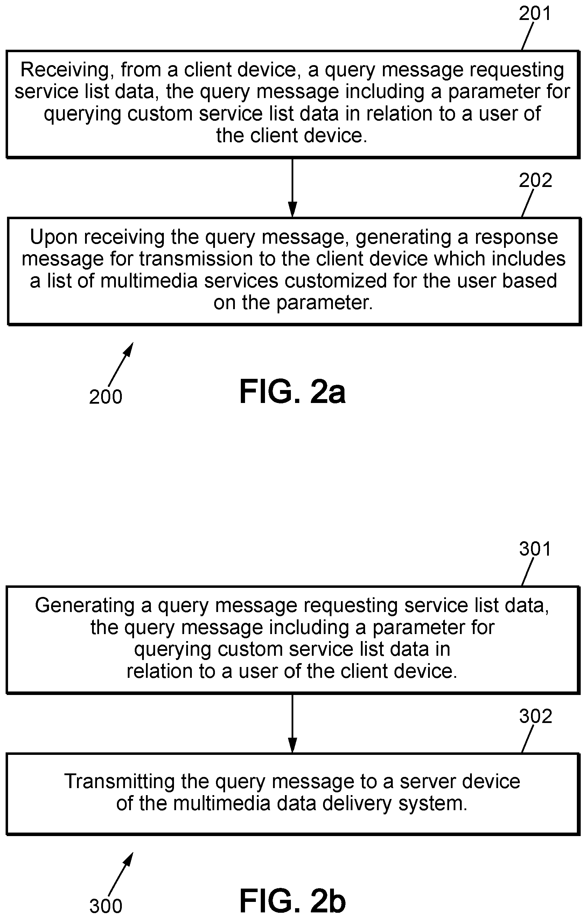

Fig. 2a is a block schematic diagram of a method (200) for delivering multimedia data to a user device according to embodiments of the present subject disclosure.

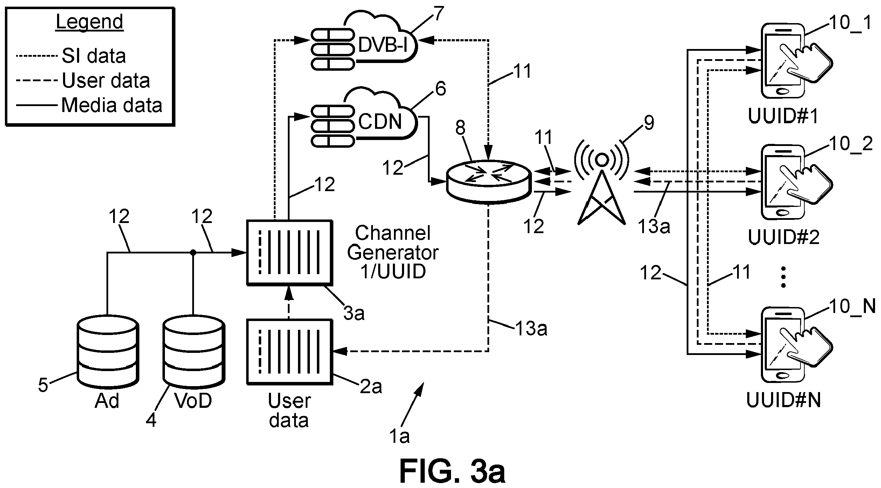

The exemplary method illustrated by Fig. 2a may advantageously be implemented on a server device of a multimedia data delivery system, such as the exemplary server device (13) shown on Figs 1a - 1b, or the DVB-I server (7) shown on Figs. 3a - 3c described below.

One may therefore consider for implementation of embodiments of the proposed method a multimedia data delivery system such as illustrated on Fig. 1a which comprises a user device and a server device which may in some embodiments implement a DVB-I client function, and one or more of a DVB-I SLR function and a DVB-I SLS function, respectively, or the multimedia data delivery system illustrated on Figs. 3a - 3c which comprises one or more user devices configured to exchange data with a DVB-I server of the multimedia data delivery system. In particular, one or more user devices may be configured to use data communication (including protocols) as defined in the DVB-I technical specifications to communicate with a DVB-I server.

The proposed method may advantageously be implemented on an improved DVB-I SLR function and/or an improved DVB-I SLS function, which may be implemented in software, hardware, or as a combination of software and hardware. In one or more embodiments, the proposed improved DVB-I SLR function and/or improved DVB-I SLS function may be implemented as one or more software programs running on a server (e.g. a Linux server).

In one or more embodiments, the server device of the multimedia data delivery system may be configured to receive (201), from the user device, a query message requesting service list data, which query message includes a parameter (e.g. a value of a parameter) for querying custom service list data in relation to a user of the user device.

In one or more embodiments, the parameter for querying custom service list data may be carried by one or more information elements included in the query message, corresponding to respective fields in the query message. In some embodiments, the one or more elements carrying the parameter may include key-value information elements, that is, a key information element and a value information element, for example respectively corresponding to a key field and a value filed in the query message. The key information element may be used to inform the recipient of the query message that custom service list data is requested, and the value information element (which may include data representing one or more values) may be used to provide the recipient of the query message with data based on which custom service list data may be generated or selected in one or more multimedia content databases by the server device.

In some embodiments, the value information element (which may include data representing one or more values) may be used to provide the recipient of the query message with identification data related to the user of the user device, based on which custom service list data may be generated or selected in one or more multimedia content databases by the server device. Depending on the embodiment, the identification data may comprise one or more of a user identifier, a group identifier of a group to which the user belongs, and a profile identifier of a profile that is being used by the user.

In one or more embodiments, the server device may be configured to, upon receiving the query message, generate (202) a response message to be transmitted to the user device for responding to the query message, which response message includes a list of multimedia services customized for the user based on the parameter (e.g. based on a value of the parameter).

In some embodiments, the server device may be configured to generate custom service list data by selecting, among service list data stored in one or more database, custom service list data according to one or more selection criterion based on the received parameter.

In some embodiments, the server device may be configured to generate custom service list data by filtering service list data generated from data stored in one or more database according to one or more filtering criterion based on the received parameter.

In some embodiments, the server device may be further configured to transmitting, to the user device, the response message.

Fig. 2b is a block schematic diagram of a method (300) for delivering multimedia data to a user device according to embodiments of the present subject disclosure.

The exemplary method illustrated by Fig. 2b may advantageously be implemented on a user device of a multimedia data delivery system, such as the exemplary user device (11) shown on Figs 1a - 1b, or the user devices (10a, 10b, 10c) shown on Figs. 3a - 3c described below.

One may therefore consider for implementation of embodiments of the proposed method a multimedia data delivery system such as illustrated on Fig. 1a which comprises a user device and a server device which may in some embodiments implement a DVB-I client function, and one or more of a DVB-I SLR function and a DVB-I SLS function, respectively, or the multimedia data delivery system illustrated on Figs. 3a - 3c which comprises one or more user devices configured to exchange data with a DVB-I server of the multimedia data delivery system. In particular, one or more user devices may be configured to use data communication (including protocols) as defined in the DVB-I technical specifications to communicate with a DVB-I server.

The proposed method may advantageously be implemented on an improved DVB-I client function, which may be implemented in software, hardware, or as a combination of software and hardware. In one or more embodiments, the proposed improved DVB-I client function may be implemented as a software program running on a user device.

In one or more embodiments, the user device of the multimedia data delivery system may be configured to generate (301) a query message requesting service list data, the query message including a parameter (e.g. a value of a parameter) for querying custom service list data in relation to a user of the user device.

In one or more embodiments, the parameter for querying custom service list data may be carried by one or more information elements included in the query message, corresponding to respective fields in the generated query message. In some embodiments, the one or more elements carrying the parameter may include key-value information elements, that is, a key information element and a value information element, for example respectively corresponding to a key field and a value filed in the generated query message. The key information element may be used to inform the recipient of the query message that custom service list data is requested, and the value information element (which may include data representing one or more values) may be used to provide the recipient of the query message with data based on which custom service list data may be generated or selected in one or more multimedia content databases by the server device.

In some embodiments, the value information element (which may include data representing one or more values) may be used to provide the recipient of the query message with identification data related to the user of the user device, based on which custom service list data may be generated or selected in one or more multimedia content databases by the server device. Depending on the embodiment, the identification data may comprise one or more of a user identifier, a group identifier of a group to which the user belongs, and a profile identifier of a profile that is being used by the user.

In one or more embodiments, the user device may be further configured to transmitting the query message to a server device of the multimedia data delivery system.

In some embodiments, the user device may be further configured to receive, from the server device, a response message which includes custom service list data (e.g. a list of multimedia services customized for the user).

Therefore, in one or more embodiments, a user device may be configured to include, in a query message for requesting service list data, a parameter (e.g. a value of a parameter) for querying custom service list data (which may be indifferently referred to herein as a "customization parameter" or a "customization parameter"). Using a query message that includes a customization parameter advantageously allows informing the recipient of the query message that such query message is for obtaining custom service list data, such as, for example, one or more custom service lists, that is, service lists that are customized based on the parameter (e.g. based on a value of the parameter), whether provided in the form of an Aggregated Service List or Service List or in the form of Service List Entry Points when using the present subject disclosure in a DVB-I context. The user device may then transmit the query message to a server device. In some embodiments, the server device may be configured to process the received query message that includes a customization parameter by generating a response message that includes a list of multimedia services customized for the user based on the parameter (e.g. based on a value of the parameter), and transmit this response message to the user device as a response to the query message.

The present subject disclosure may advantageously be implemented in a DVB-I framework, as described in the following.

As provided in the DVB-I specifications, the following parameters/attributes may be used in queries to a Service List Registry, in the following order: TargetCountry, regulatorListFlag, Delivery, Language, Genre, ProviderName. Further details on these parameters can be found in Section 5.1.3.2 of the document "DVB-I Bluebook A177r4", dated September 2022.

However, none of the above parameters (TargetCountry, regulatorListFlag, Delivery, Language, Genre, ProviderName) specified for DVB-I allows a DVB-I client to query customized service list data. For example, none of the above parameters specified for DVB-I allows a DVB-I client to query one or more lists of services customized for the user of the user device, for a group (e.g. a user group) to which the user of the user device belongs, or for a user profile used by the user of the user device. This limitation is reflected by the following prescription in Section 5.1.3.2 the "DVB-I Bluebook A177r4" document dated September 2022: "When multiple parameters are provided, the values shall be ordered alphabetically or numerically increasing. An HTTP 400 (Bad Request) response shall be returned: If an undefined query parameter is provided with a request to a Service List Registry endpoint, or if an invalid value is provided for a query parameter."

In order to overcome this limitation, the present subject disclosure advantageously provides the use of improved DVB-I queries (e.g. improved "Service List Discovery Query" queries, improved "Service List Query" queries, and improved "Content Guide Query" queries) in that such DVB-I queries include, in one or more embodiments, a customization parameter according to one or more embodiments, for example as an additional parameter (which may be referred to herein as "Customld") to a DVB-I "Service List Discovery Query" query parameters (TargetCountry, regulatorListFlag, Delivery, Language, Genre, ProviderName), and correspondingly the use of improved DVB-I clients configured to use the proposed improved DVB-I queries.

In one or more embodiments, the personalization parameter ("Customld") may advantageously allow the DVB-I client to provide additional user information upon which the SLR can personalize the response.

Thanks to the customization parameter, the DVB-I client may indicate in the query (e.g. a "Service List Discovery Query" or a "Service List Query") a request for information related to custom services (services customized for the user, for a group of users, or for a user profile). For example, in some embodiments, the DVB-I client may advantageously use the proposed improved DVB-I query to request from a DVB-I SLR a list of services (e.g. in the form of a Service List Entry Points) customized in relation to the user of the user device (for example customized for the user as an individual, for a profile of the user, or for a group of users (for the user as belonging to a group)).

Therefore, in one or more embodiments, DVB-I clients may offer service lists (as defined in the DVB-I technical specifications) which are reserved and/or personalized in relation to a user of the DVB-I client (for the user, for a group of users which the user belongs to, and/or for a user profile used by the user), through a received response to a request for customized service list data presented to a DVB-I server.

In one or more embodiments, FAST services may therefore advantageously be managed through a DVB-I framework configured for implementing embodiments of the present subject disclosure, as illustrated in Figs. 3a - 3c described below.

In some embodiments, the user device may be configured to operate as a DVB-I client configured to implement a DVB-I client function as described in the DVB-I specifications, and the server device may be configured to implement one or more DVB-I server functions, such as one or more of a DVB-I Service List Server (SLS) function and a Service List Registry (SLR) function, as described in the DVB-I specifications.

For example, in some embodiments using a DVB-I framework, the user device may comprise a DVB-I client engine configured for implementing one or more DVB-I client functions. Depending on the embodiment, the DVB-I client engine may be configured to generate and issue a service list query comprising a customization parameter, such as one or more of a Service List Query to be issued to a SLS function, a Service List Discovery Query to be issued to a SLR function, and a Content Guide Query to be issued to a Content Guide Server (CGS) function, in each case comprising a customization parameter according to embodiments of the present subject disclosure.

Likewise, in some embodiments using a DVB-I framework, the server device may comprise one or more DVB-I server engines configured for implementing one or more DVB-I server functions, such as one or more of a DVB-I Service List Server engine configured for implementing a DVB-I SLR function, a DVB-I Service List Registry engine configured for implementing a DVB-I SLS function, and a DVB-I Content Guide Server engine configured for implementing a DVB-I CGS function.

As provided in the DVB-I specifications, the DVB-I server (e.g. implementing one or more of a SLR and a SLS) may in some embodiments be an HTTP endpoint available at a URL known to the DVB-I client.

A DVB-I server implementing a SLR function may be configured for, upon receiving a "Service List Discovery Query" query issued by a DVB-I client comprising a customization parameter according to embodiments of the present subject disclosure, responding to the query, for example by returning a list of Service List Entry Points (as described in the document "DVB-I Bluebook A177r4", dated September 2022, as the case may be adapted for implementing one or more embodiments of the proposed methods) which is customized or with customization information generated based on the received customization parameter.

A DVB-I server implementing a SLS function may be configured for, upon receiving a "Service List Query" query issued by a DVB-I client comprising a customization parameter according to embodiments of the present subject disclosure, responding to the query, for example by returning an Aggregated Service List or Service List (as described in the document "DVB-I Bluebook A177r4", dated September 2022, as the case may be adapted for implementing one or more embodiments of the proposed methods) which is customized or with customization information generated based on the received customization parameter.

A DVB-I server implementing a CGS function may be configured for, upon receiving a "Content Guide Query" query issued by a DVB-I client comprising a customization parameter according to embodiments of the present subject disclosure, responding to the query, for example by returning Content Guide Data (as described in the document "DVB-I Bluebook A177r4", dated September 2022, as the case may be adapted for implementing one or more embodiments of the proposed methods) which is customized or with customization information generated based on the received customization parameter.

Depending on the embodiment, the improved DVB-I query may comprise an identifier which corresponds to a user, a user device, a user profile, or a group of users, based on which custom service list data may be provided to the DVB-I client in response to the query, possibly further to the completion of authentications and/or authorization procedures for the DVB-I client.

In order to overcome the above limitation of the DVB-I framework, the present subject disclosure also provides the use of improved DVB-I SLR functions and/or improved SLS functions in that such improved SLR functions and SLS functions may be configured to receive proposed improved DVB-I queries (e.g. improved "Service List Discovery Query" queries or improved "Service List Query" queries, respectively), process such queries and generate custom service list data to be provided to the DVB-I clients that issued such queries.

For example, in some embodiments, a DVB-I client (e.g. of a user device) may transmit to a SLR function (respectively a SLS function) of a server device a query (e.g. a "Service List Discovery Query" (respectively a "Service List Query")) which comprises a customization parameter (e.g. "Customld" parameter) among or in addition to (e.g. following) one or more of the parameters specified for a DVB-I query (e.g. for a Service List Discovery Query: TargetCountry, regulatorListFlag, Delivery, Language, Genre, and ProviderName).

For example, in some embodiments, a DVB-I client (e.g. of a user device) may transmit to a SLR function of a server device a Service List Discovery Query comprising the following parameters: TargetCountry, regulatorListFlag, Delivery, Language, Genre, ProviderName, and Customld.

In one or more embodiments, the customization parameter (e.g. "Customld" parameter) may be a customization parameter used by the DVB-I client to query custom service list data (e.g. one or more custom service lists) from a DVB-I SLR function (respectively a DVB-I SLS function) based on the customization parameter (e.g. based on a value of the customization parameter).

In one or more embodiments, the customization parameter (e.g. "Customld" parameter) may be inserted in a DVB-I query using a key-value format, that is, using an information element (key) that informs the recipient of the query that the parameter is a customization parameter, and an information element (value) that informs the recipient of the query of one or more values of the customization parameter.

For example, in some embodiments, the "Customld" parameter (or any parameter for querying custom service list data) may be included by the DVB-I client in a DVB-I query (e.g. a "Service List Discovery Query" or a "Service List Query") for informing the recipient of the query that such query is for one or more custom service lists, that is, for service lists that are customized based on the parameter (e.g. based on a value of the parameter).

In some embodiments, the SLR function of a DVB-I server device may be configured to process a received query (e.g. a "Service List Discovery Query") containing a customization (e.g. "Customld") parameter by generating a response message (e.g. Service List Entry Points) that includes custom service list data (for example comprising a list of multimedia services) customized for the user based on the parameter (e.g. based on a value of the parameter), and transmitting this response message to the user device as a response to the query. For example, a DVB-I server implementing a SLR function may be configured for, upon receiving a "Service List Discovery Query" query that includes a customization parameter ("Customld") issued by a DVB-I client, responding to the query, for example by returning for a given service list a list of service list entry points filtered in relation with the Customld query parameter. The filtering function may be performed on a service loop inside the ServiceType template provided in the DVB-I specifications based on the Customld customization parameter.

In some embodiments, the SLS function of a DVB-I server device may be configured to process a received query (e.g. a "Service List Query") containing a customization (e.g. "Customld") parameter by generating a response message (e.g. Service List) that includes custom service list data (for example comprising a list of multimedia services) customized for the user based on the parameter (e.g. based on a value of the parameter), and transmitting this response message to the user device as a response to the query. For example, a DVB-I server implementing a SLS function may be configured for, upon receiving a "Service List Query" query that includes a customization parameter ("Customld") issued by a DVB-I client, responding to the query, for example by returning for a given service list a list of services filtered in relation with the Customld query parameter. The filtering function may be performed on a service loop inside the ServiceList template provided in the DVB-I specifications based on the Customld customization parameter.

In some embodiments, the query message received by the server device from the user device according to the present subject disclosure may be generated by the user device as a DVB-I query message. Depending on the embodiment, the DVB-I query message may be of the Service List Query type (as specified in the DVB-I specifications) to be issued to a Service List Server, of the Service List Discovery Query type (as specified in the DVB-I specifications) to be issued to a Service List Registry, or of the Content Guide Query type (as specified in the DVB-I specifications) to be issued to a Content Guide Server. The content (e.g. parameters) and/or format of the Service List Query message, Service List Discovery Query message, and/or Content Guide Query message, as described in the document "DVB-I Bluebook A177r4", dated September 2022, as the case may be adapted for implementing one or more embodiments of the proposed methods, may advantageously be adapted to implement embodiments of the present subject disclosure, for example with respect to inclusion of a customization parameter.

In some embodiments, the customization parameter may be included in a query message with other parameters (e.g. in the case of a DVB-I "Service List Discovery Query" query message one or more of the targetCountry, regulatoryListFlag, Delivery, Language, Genre, and ProviderName parameters) in a specific order, so that the recipient of the query message (e.g. a server device including, in the case of a DVB-I query message, a SLR function) may process the query message by parsing the ordered sequence of parameters included in the query message, and detect, based on the position of the customization parameter in the sequence, that the query message includes a customization parameter. The server device may then generate a custom list of services based on the value of the customization parameter.

In one or more embodiments, a value of the customization parameter may correspond to an identifier related to the user of the user device. In such embodiments, the query message may include one or more identifiers related to the user of the user device as customization parameter (e.g. as customization parameter value).

In some embodiments, the customization parameter (e.g. "Customld" parameter) may therefore be inserted in a DVB-I query using a key-value format using an information element (key) that informs the recipient of the query that the parameter is a customization parameter, and an information element (value) that informs the recipient of the query of one or more identifiers related to the user of the DVB-I client, such as, for example, one or more of a identifier of the user (e.g. a UUID), an identifier of a group of users to which the user belongs, an identifier of a user profile that is used by the user and an identifier of a type of device used by the user to receive the distributed multimedia content.

For example, a query embedding a customization parameter to a Service List Registry for DVB-I service lists published by a DVB-I service list provider named "YourOwnTV" and customized for user identifier 0x00002504 may be as follows:
https://dvbisr.private-service-list-registry.com/query?ProviderName=YourOwnTV?CustomId=0x00002504.

In some embodiments, a DVB-I client (e.g. of a user device) may transmit to a SLR function of a server device a query (e.g. a "Service List Discovery Query") which comprises a parameter specified for a DVB-I Service List Discovery Query (e.g. TargetCountry, regulatorListFlag, Delivery, Language, Genre, and ProviderName) with a value in a range of values that is reserved for signaling of a query for personalized services. In such embodiments, a parameter specified for a DVB-I Service List Discovery Query may be used for signaling of personalized service query (custom service list data query) through specific values, for example a specific value range, so that no additional customization parameter may be inserted in the DVB-I query.

In some embodiments, a DVB-I client (e.g. of a user device) may transmit to a SLS function of a server device a query (e.g. a "Service List Query") which comprises a parameter specified for a DVB-I Service List Query (e.g. Name, ProviderName). In such embodiments, a parameter specified for a DVB-I Service List Query may be used for signaling of personalized service query (custom service list data query) through specific values, for example a specific value range, so that no additional customization parameter may be inserted in the DVB-I query.

According to embodiments of the present subject disclosure, the underlying XML structures specified in the document "DVB-I Bluebook A177r4", dated September 2022, may be modified with additional customization data supporting one or more of custom service lists and custom services.

For example, in one or more embodiments using a DVB-I framework, a "serviceList" may include one or more "service" elements, each corresponding to a service described by a "serviceType"

Section 5.5.1 of the document "DVB-I Bluebook A177r4," dated September 2022 (« ServiceList ») defines a "ServiceList" information element that may be used in a XML instance document returned on interface B2 in response to a service list query. Section 5.5.1 of the document "DVB-I Bluebook A177r4" further defines a "serviceType" element.

In one or more embodiments, the "ServiceList" information element (and corresponding Service List field) may be modified to include a customization parameter (for example called "Customld") according to embodiments of the present subject disclosure.

In some embodiments, the XML template of the XML instance document containing a modified "ServiceList" element may include the following element: "<attribute ref="CustomId"/>".

For example, the XML template may be as follows:

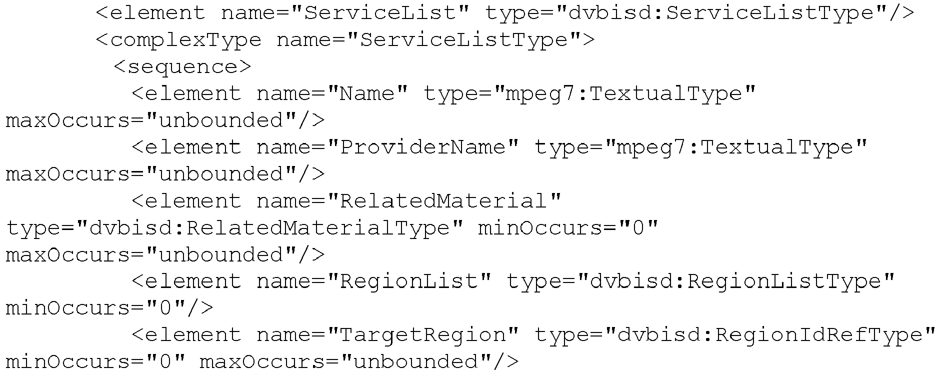

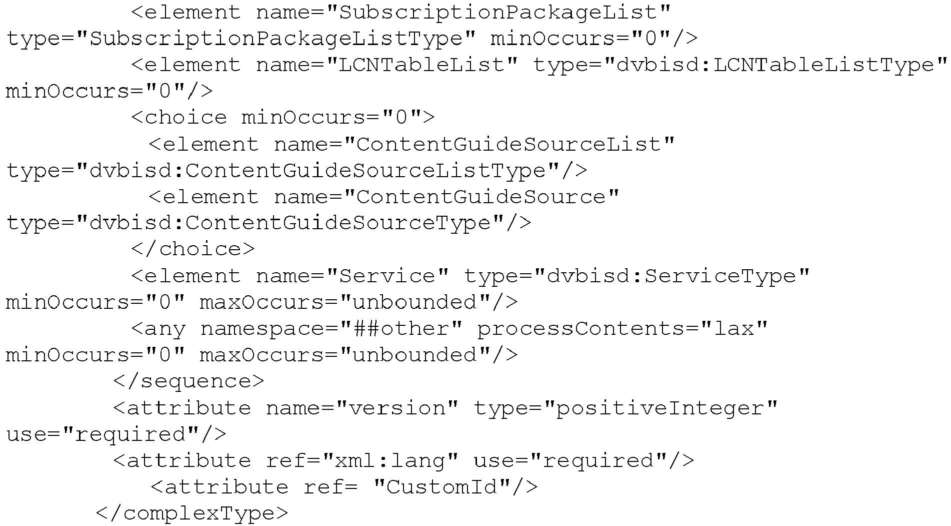

In some embodiments, the Service List fields provided in Table 22 of the "DVB-I Bluebook A177r4" document may include an additional field for the customization parameter, for example defined as follows:

| **Name** | **Semantic Definition** | **Constraints** |
|---|---|---|
| @Customld | Optionally specifies Customld set to enable delivery of personalized channel. This may be used for service list filtering purpose in case of FAST channels. | Optional |

In one or more embodiments, the "serviceType" information element (and corresponding Service Type field) may be modified to include a customization parameter (for example called "Customld") according to embodiments of the present subject disclosure.

In some embodiments, the XML template of the XML instance document containing a modified "ServiceType" element may include the following element: "<attribute ref="CustomId"/>".

For example, the XML template may be as follows:

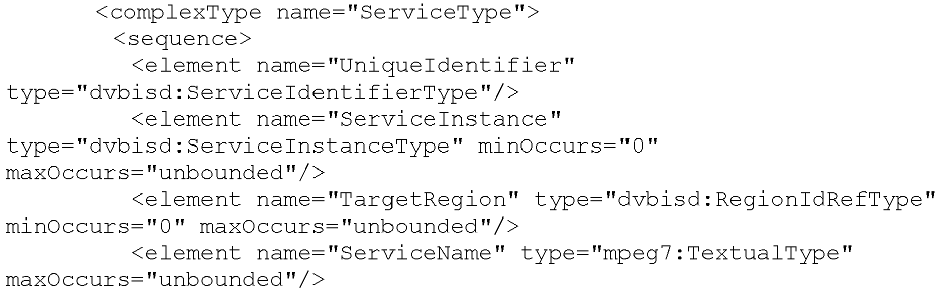

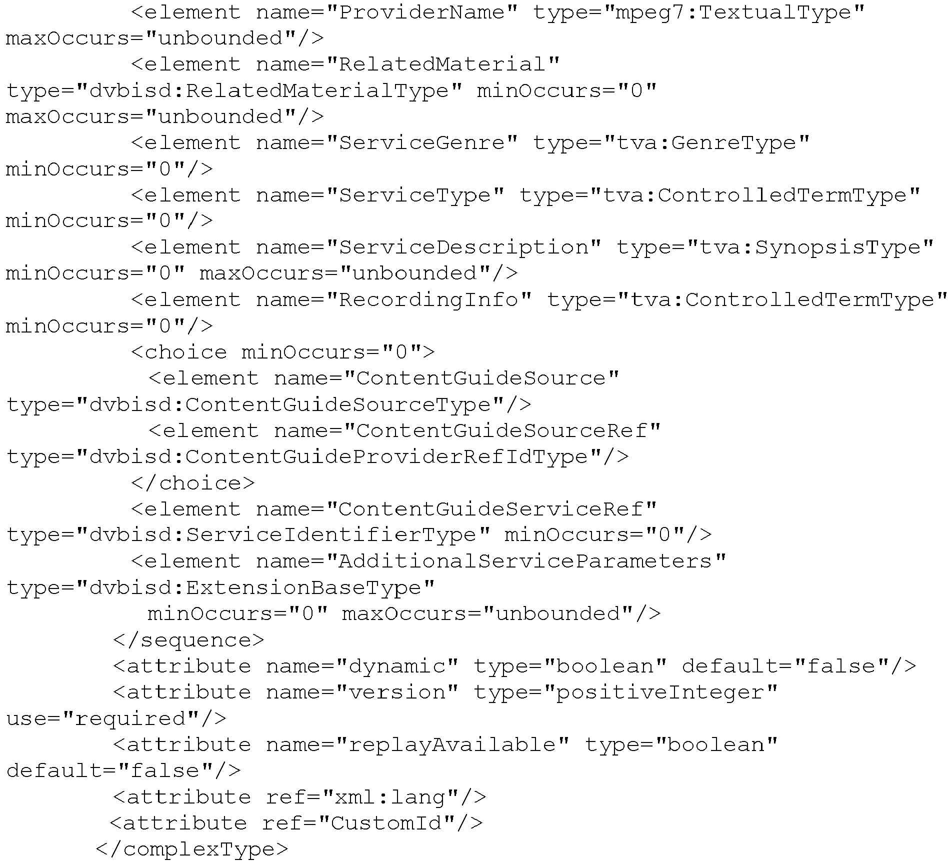

In some embodiments, the Service Type fields provided in Table 23 of the "DVB-I Bluebook A177r4" document may include an additional field for the customization parameter, for example defined as follows:

| **Name** | **Semantic Definition** | **Constraints** |
|---|---|---|
| @Customld | Optionally specifies Customld set to enable delivery of personalized channel. This may be used for service list filtering purpose in case of FAST channels. | Optional |

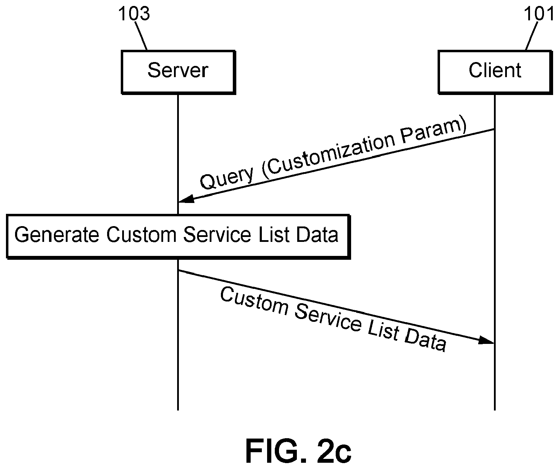

Fig. 2c is a schematic diagram of a request-response data communication exchange between a server and a client according to embodiments of the present subject disclosure.

As shown on Fig. 2c, the data communication between the server and the client may for example take place between the user device (101) and the server device (103) illustrated on Figs. 1a and 1b.

As shown on Fig. 2c, in one or more embodiments, the user device (101) may send to the server device (103) a request message ("Query"), for example in the form of a HTTP request, which includes a customization parameter. In some embodiments, the customization parameter may include an identifier ("ID") related to the user of the user device, such as, for example and depending on the embodiment, one or more of a UUID of the user, a group identifier, and a user profile identifier. In some embodiments, the server device (103) may process the request based on the customization parameter, including generating custom service list data based on the customization parameter and, in some embodiments, send the Custom Service List Data to the user device (101) in response to the request, for example in the form of a HTTP response.

In some embodiments, the user device (101) may implement an improved DVB-I client function (configured for implementing the proposed scheme), and the server device (103) may implement one or more DVB-I server functions including an improved DVB-I SLR function and an improved DVB-I SLS function. In such embodiments, the request may include a DVB-I query that includes an identifier ("ID") related to the user of the user device as customization parameter, issued by the DVB-I client, and the response message including the Custom Service List Data may be returned by the DVB-I server function (DVB-I SLR or, as the case may be, DVB-I SLS), and may include a list of Service List Entry Points that includes the Custom Service List Data in the case of a DVB-I SLR function, or an Aggregated Service List or Service List that includes the Custom Service List Data in the case of a DVB-I SLS function.

For example, in some embodiments, the value of the customization parameter may correspond to a Universally Unique Identifier (UUID) related to the user of the user device. In such embodiments, the query message may include a UUID related to the user of the user device, as customization parameter.

As another example, in some embodiments, the value of the customization parameter may correspond to an identifier of a group to which the user of the user device belongs. In such embodiments, the query message may include a group identifier related to a group to which the user of the user device belongs, as customization parameter.

As yet another example, in some embodiments, the value of the customization parameter may correspond to an identifier of a profile that corresponds to the user of the user device. In such embodiments, the query message may include a profile identifier related to a profile of the user of the user device, as customization parameter.

As a consequence, the DVB-I framework as improved by the present subject disclosure may be advantageously used in some embodiments for service list discovery or service list query with respect to personalized data or services reserved for or associated with specific users, specific profiles or specific groups of one or more users. For example, in one or more embodiments, a DVB-I query on service list registries as proposed by the present subject disclosure will advantageously support one or more customization parameters, such as, for example, one or more of a UUID, a user group ID, and a user profile ID.

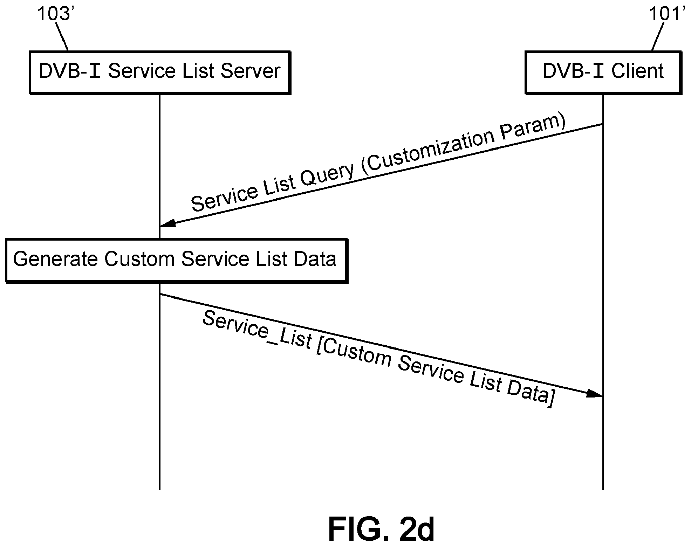

Fig. 2d is a schematic diagram of a request-response data communication exchange between a DVB-I Service List Server and a DVB-I Client according to embodiments of the present subject disclosure.

As shown on Fig. 2d, the data communication between the server and the client may for example take place between the user device (101) and the server device (103) illustrated on Figs. 1a, 1b, and 2c, in which cases the user device (101) may be configured as a DVB-I Client (101'), and the server device may be configured as a DVB-I Service List Server (103').

As shown on Fig. 2d, in one or more embodiments, the DVB-I Client (101') may send to the DVB-I Service List Server (103') a Service List Query request message ("Service List Query"), for example in the form of a HTTP request, which includes a customization parameter. In some embodiments, the customization parameter may include an identifier ("ID") related to the user of the user device, such as, for example and depending on the embodiment, one or more of a UUID of the user, a group identifier, and a user profile identifier. In some embodiments, the DVB-I Service List Server (103') may process the request based on the customization parameter, including generating an Aggregated Service List or Service List that includes custom service list data ("Service_List[Custom Service List Data]") based on the customization parameter and, in some embodiments, send the generated Aggregated Service List or Service List to the DVB-I Client (101') in response to the request, for example in the form of a HTTP response.

In some embodiments, a "serviceList" information element (corresponding to a Service List field) that include custom service list data may be generated, e.g. by the Service List Server, by filtering a set of one or more Service Lists using a filtering criterion which is based on the received customization parameter. For example, the Service List that include custom service list data may be generated by filtering a set of one or more Service Lists using a filtering criterion based on one or more of a UUID of the user, a group identifier, and a user profile identifier.

In some embodiments, the "ServiceList" information element that include custom service list data may be generated, e.g. by the Service List Server, by selecting in a set of one or more Service Lists those entry points matching a selection criterion which is based on the received customization parameter. For example, the Service List that include custom service list data may be generated by selecting in a set of one or more Service Lists those entry points matching a selection criterion which is based on one or more of a UUID of the user, a group identifier, and a user profile identifier.

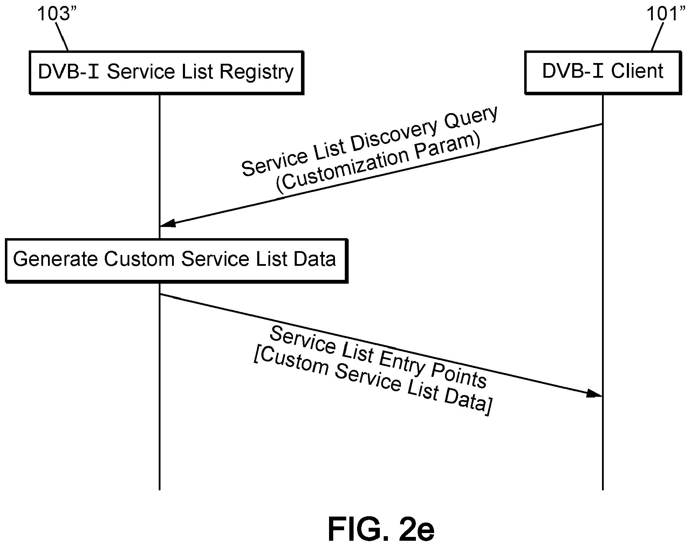

Fig. 2e is a schematic diagram of a request-response data communication exchange between a DVB-I Service List Registry function and a DVB-I Client according to embodiments of the present subject disclosure.

As shown on Fig. 2e, the data communication between the server and the client may for example take place between the user device (101) and the server device (103) illustrated on Figs. 1a, 1b, and 2c, in which cases the user device (101) may be configured as a DVB-I Client (101"), and the server device may be configured as a DVB-I Service List Registry (103").

As shown on Fig. 2e, in one or more embodiments, the DVB-I Client (101") may send to the DVB-I Service List Registry (103") a Service List Discovery Query request message ("Service List Discovery Query"), for example in the form of a HTTP request, which includes a customization parameter. In some embodiments, the customization parameter may include an identifier ("ID") related to the user of the user device, such as, for example and depending on the embodiment, one or more of a UUID of the user, a group identifier, and a user profile identifier. In some embodiments, the DVB-I Service List Registry (103") may process the request based on the customization parameter, including generating one or more Service List Entry Points that includes custom service list data ("Service List Entry Points [Custom Service List Data]") based on the customization parameter and, in some embodiments, send the generated Service List Entry Points to the DVB-I Client (101') in response to the request, for example in the form of a HTTP response.

In some embodiments, the Service List Entry Points that include custom service list data may be generated by the Service List Registry function by filtering a set of one or more Service List Entry Points using a filtering criterion which is based on the received customization parameter. For example, the Service List Entry Points that include custom service list data may be generated by the Service List Registry function by filtering a set of one or more Service List Entry Points using a filtering criterion based on one or more of a UUID of the user, a group identifier, and a user profile identifier.

In some embodiments, the Service List Entry Points that include custom service list data may be generated by the Service List Registry function by selecting in a set of one or more Service List Entry Points those entry points matching a selection criterion which is based on the received customization parameter. For example, the Service List Entry Points that include custom service list data may be generated by the Service List Registry function by selecting in a set of one or more Service List Entry Points those entry points matching a selection criterion which is based on one or more of a UUID of the user, a group identifier, and a user profile identifier.

In the following, exemplary use cases are described for illustrating various embodiments of the present subject disclosure.

### First use case - FAST per user ID (UUID)

Figure 3a illustrates a first exemplary Free Ad-Supported Streaming TV (FAST) combined with DVB-I use case for which embodiments of the present subject disclosure may be used.

Shown on Fig. 3a is a media service delivery system 1a comprising a sub-system for generating and distributing media data corresponding to personalized services to one or more of N user devices (10_1, 10_2, ..., 10_N), and a sub-system for discovering and more generally exchanging signaling data regarding personalized services available to a data server ("user data" server 2a).

The sub-system for generating and distributing media data may comprise an advertisement content database and server (5) configured for returning advertisement content in response to a request for advertisement content, a multimedia content database and server (4) (e.g. a Voice on Demand (VoD) database and server) configured for returning multimedia content in response to a request for multimedia content, a multimedia content channel generator server (3a) operatively coupled for data communication with the advertisement content database and server (5) and multimedia content database and server (4), and configured for generating multimedia channel data based on content fetched from the advertisement content database and server (5) and the multimedia content database and server (4), a multimedia content distribution network, for example comprising one or more Content Distribution Network (CDN) servers (6) operatively connected for data communication with a wireless network (9) through one or more routers (8), configured for distributing multimedia content (for example FAST channels content) to the one or more of N user devices (10_1, 10_2, ..., 10_N).

The sub-system for exchanging signaling data regarding personalized services may comprise the user data server (2a), which may be configured to store user information data, e.g. comprising user identifiers, and operatively coupled to provide user information data to the multimedia content channel generator server (3a) for generating multimedia content that is customized for a user identified by a UUID. The sub-system for exchanging signaling data regarding personalized services may further comprise one or more DVB-I servers (7) which provide a DVB-I framework offering DVB-I services to DVB-I clients implemented in the one or more of N user devices (10_1, 10_2, ..., 10_N). The DVB-I servers (7) may be operationally connected to the multimedia content channel generator server (3a), so as to receive from the multimedia content channel generator server (3a) data regarding channels created by the content provider for its users, and to the routers (8), so that signaling data may be exchanged between the DVB-I servers (7) and the user devices (10_1, 10_2, ..., 10_N) through the routers (8) and the wireless network (9).

Data comprised in a user request (such as, in the example of Fig. 3a, user identifier data (e.g. UUID data)) transmitted from a user device (10_1, 10_2, ..., 10_N) to the user data server (2a), and in some embodiments to the channel generator server (3a), may be referred to herein as "User Data", and are represented on Fig. 3a by a flow (13a) representing one or more flows originated from one or more of the user devices (10_1, 10_2, ..., 10_N), respectively, and transmitted to the user data server (2a).

Multimedia content data distributed to a user device (10_1, 10_2, ..., 10_N) may be referred to herein as "Media" data and are represented on Fig. 3a by a Media data flow (12) representing one or more media data flows distributed to the user devices (10_1, 10_2, ..., 10_N).

Multimedia content of the personalized service data flow may be transmitted to a user device through a media distribution network, for example comprising the one or more Content Delivery Network (CDN) servers (6) providing multimedia content data to the user device (10_1, 10_2, ..., 10_N) through the network router (8) and the wireless network (9) as shown on Fig. 3a.

Signaling data communications between a DVB-I client of a user device (10_1, 10_2, ..., 10_N) and a DVB-I server (7) may be referred to herein as "Signaling Information" (SI), and are represented on Fig. 3a by a SI data flow (11) representing one or more flows for each user device (10_1, 10_2, ..., 10_N). As shown on Fig. 3a, SI Data (11) may be transmitted between a user device and the DVB-I server (7) through the network router (8) and the wireless network (9).

As shown on Fig. 3a, a user of a user device (10_1, 10_2, ..., 10_N) may initiate a request for a personalized FAST TV service on the user device. The user device may be configured to generate a request for a personalized service based on a user identifier (e.g. respective Universally Unique Identifiers (UUID) UUID#1, UUID#2, and UUID#N of users of user devices 10_1, 10_2, ..., 10_N) associated with the user, and to transmit the request to the data server (2a). The request for a personalized service may comprise user identifier data, such as, for example, a UUID of the user.

The data server (2a) may be configured to store user preferences related to content delivered to user devices (10_1, 10_2, ..., 10_N), and may store, in some embodiments, user preferences associated with user identifiers (e.g. respective Universally Unique Identifiers (UUID) UUID#1, UUID#2, and UUID#N of users of user devices 10_1, 10_2, ..., 10_N).

The user data server (2a) may further be configured for, upon receipt of a request for a personalized or customized multimedia content (e.g. FAST channel) delivery service from a user device, generating, based on the user identifier associated with the request, data related to user preferences associated with the identifier of the user (e.g. the UUID) using the user device from which the request originated, and transmitting such data to the channel generator server (3a), so that a personalized FAST channel be generated for the user device in response to the request.

The channel generator server (3a) may be configured for, upon receipt of the data related to the user preferences from the user data server (2a), generating, for the user corresponding to the user preferences (e.g. in association with the UUID corresponding to the user of the user device from which the request originated), a personalized service data flow carrying a personalized FAST channel corresponding to a per-user personalized service based on content and advertisement data personalized for the user, for example by combining content data corresponding to the request with advertisement data personalized for the user.

For example, the channel generator server (3a) may be configured to generate a multimedia content channel carried by the personalized service media data flow based on multimedia content retrieved from the multimedia content database and server (4) and advertisement content retrieved from the advertisement content database and server (5).

In addition, the channel generator server (3a) may be configured for registering with a DVB-I server (7) the personalized service that was created for the user device.

The DVB-I server (7) may be configured for storing, for each user identifier, a list of one or more personalized services that are available to the user corresponding to the identifier.

A user of one of the user devices (10_1, 10_2, ..., 10_N) may initiate the generation of one or more DVB-I queries (e.g. in the form of one or more HTTP requests), such as, for example, a Service List Query or a Service List Discovery Query comprising a customization parameter according to embodiments of the present subject disclosure, to be transmitted to the DVB-I server (7) for discovery of the user's personalized service(s) (such as the user's personalized FAST channel(s)). The DVB-I server (7) may be configured to respond to such requests with data (e.g. in XML format) describing the service(s) (e.g. the FAST channels) or list(s) of services that are available to the user of the user device.

Therefore, the system (1a) of Fig. 3a advantageously allows combining a personalized service list discovery feature that can be provided in an improved DVB-I framework according to embodiments of the present subject disclosure with a FAST channel generation framework, so as to provide users with the ability to discover per-user personalized FAST channels that are made available to them by their content provider.

### Second use case - FAST per user profile

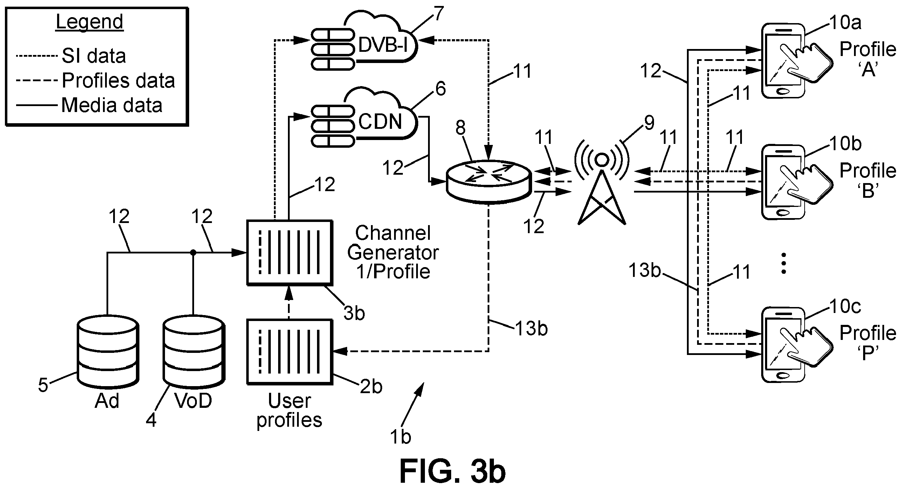

Figure 3b illustrates a second exemplary FAST combined with DVB-I use case for which embodiments of the present subject disclosure may be used.

Shown on Fig. 3b is a media service delivery system 1b which is similar to the media service delivery system 1a of Fig. 3a, except that the media service delivery system 1b is configured for managing and delivering per-user profile personalized services, instead of per-user personalized services as is the case for the media service delivery system 1a of Fig. 3a. In particular, the sub-system for exchanging signaling data regarding personalized services may comprise the user data server (2b), which may be configured to store user profile information data, e.g. comprising user profiles, and operatively coupled to provide user profile information data to the multimedia content channel generator server (3b) for generating multimedia content that is customized for a user profile identified by a user profile identifier. As described with respect to Fig. 3a, the sub-system for exchanging signaling data regarding personalized services may further comprise one or more DVB-I servers (7) which provide a DVB-I framework offering DVB-I services to DVB-I clients implemented in the one or more of N user devices (10_1, 10_2, ..., 10_N). The DVB-I servers (7) may be operationally connected to the multimedia content channel generator server (3a) so as to receive from the multimedia content channel generator server (3a) data regarding channels created by the content provider for its users, and to the routers (8), so that signaling data may be exchanged between the DVB-I servers (7) and the user devices (10_1, 10_2, ..., 10_N) through the routers (8) and the wireless network (9).

Data comprised in a user request (such as, in the example of Fig. 3b, profile identifier data (e.g. Profile 'A', Profile 'B', Profile 'C') transmitted from a user device (10_1, 10_2, ..., 10_N) to the user data server (2b), and in some embodiments to the channel generator server (3b), may be referred to herein as "Profiles Data", and are represented on Fig. 3b by a flow (13b) representing one or more flows originated from one or more of the user devices (10_1, 10_2, ..., 10_N), respectively, and transmitted to the user data server (2b).

As shown on Fig. 3b, a user of a user device (10_1, 10_2, ..., 10_N) may initiate a request for a personalized FAST TV service on the user device. The user device (10_1, 10_2, ..., 10_N) may be configured to generate a request for a personalized service based on a user profile (e.g. respective Profile 'A', Profile 'B', and Profile 'C' of users of user devices 10_1, 10_2, ..., 10_N) associated with the user, and to transmit the request to the data server (2b). The request for a personalized service may comprise profile data, such as, for example, an identifier of the profile of the user.

The data server (2b) may be configured to store profile preferences related to content delivered to user devices (10_1, 10_2, ..., 10_N) associated with profiles, and may store, in some embodiments, profile preferences associated with profile identifiers (e.g. Profile 'A', Profile 'B', and Profile 'C' of users of user devices 10_1, 10_2, ..., 10_N).

The user data server (2b) may further be configured for, upon receipt of a request for a personalized or customized multimedia content (e.g. FAST channel) delivery service from a user device, generating, based on the user profile associated with the request, data related to profile preferences associated with the profile of the user using the user device from which the request originated, and transmitting such data to the channel generator server (3b), so that a personalized FAST channel be generated for the user device in response to the request.

The channel generator server (3b) may be configured for, upon receipt of the data related to the profile preferences from the user data server (2a), generating, for the profile corresponding to the profile preferences (e.g. in association with the profile identifier corresponding to the user of the user device from which the request originated), a personalized service data flow carrying a personalized FAST channel corresponding to a per-user profile personalized service based on content and advertisement data for the user profile, for example by combining content data corresponding to the request with advertisement data personalized for the user profile.

For example, the channel generator server (3b) may be configured to generate a multimedia content channel carried by the personalized service media data flow based on multimedia content retrieved from the multimedia content database and server (4) and advertisement content retrieved from the advertisement content database and server (5).

In addition, the channel generator server (3b) may be configured for registering with a DVB-I server (7) the personalized service that was created for the user device.

The DVB-I server (7) may be configured for storing, for each user identifier, a list of one or more personalized services that are available to the user corresponding to the identifier.

A user of one of the user devices (10_1, 10_2, ..., 10_N) may initiate the generation of one or more DVB-I queries (e.g. in the form of one or more HTTP requests), such as, for example, a Service List Query or a Service List Discovery Query comprising a customization parameter according to embodiments of the present subject disclosure, to be transmitted to the DVB-I server (7) for discovery of the user's personalized service(s) (such as the user's personalized FAST channel(s)). The DVB-I server (7) may be configured to respond to such requests with data (e.g. in XML format) describing the service(s) (e.g. the FAST channels) or list(s) of services that are available for the user profile indicated in a DVB-I query.

Therefore, the system (1b) of Fig. 3b provides another example of combining a personalized service list discovery feature that can be provided in an improved DVB-I framework according to embodiments of the present subject disclosure with a FAST channel generation framework, so as to provide users with the ability to discover per-user profile personalized FAST channels that are made available to them by their content provider.

### Third use case - Dynamic content insertion

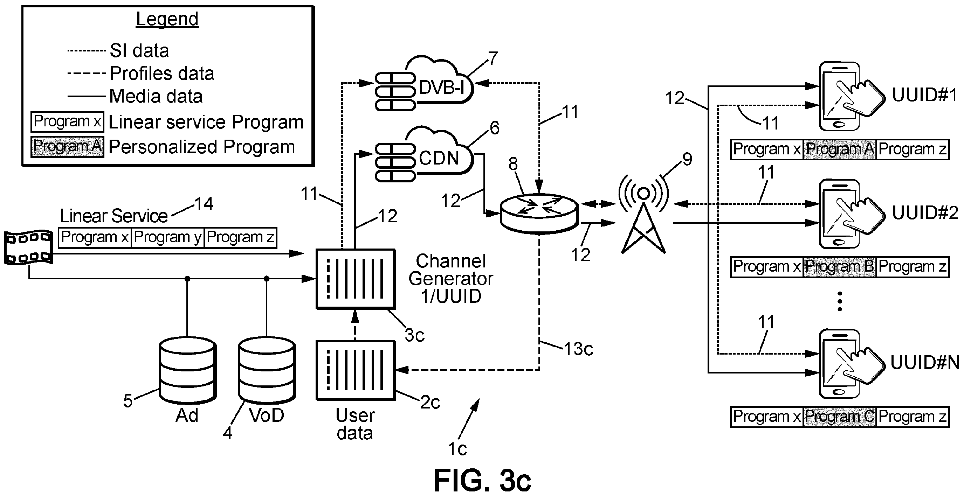

Figure 3c illustrates a third exemplary DVB-I use case for dynamic content insertion for which embodiments of the present subject disclosure may be used.

Shown on Fig. 3c is a media service delivery system 1c which is similar to the media service delivery system 1a of Fig. 3a. In particular, the sub-system for exchanging signaling data regarding personalized services may comprise the user data server (2c), which may be configured to store user information data, e.g. comprising user identifiers, and operatively coupled to provide user information data to the multimedia content channel generator server (3c) for generating multimedia content that is customized for a user identified by a UUID. As described with respect to Fig. 3a, the sub-system for exchanging signaling data regarding personalized services may further comprise one or more DVB-I servers (7) which provide a DVB-I framework offering DVB-I services to DVB-I clients implemented in the one or more of N user devices (10_1, 10_2, ..., 10_N). The DVB-I servers (7) may be operationally connected to the multimedia content channel generator server (3a) so as to receive from the multimedia content channel generator server (3a) data regarding channels created by the content provider for its users, and to the routers (8), so that signaling data may be exchanged between the DVB-I servers (7) and the user devices (10_1, 10_2, ..., 10_N) through the routers (8) and the wireless network (9).

Data comprised in a user request (such as, in the example of Fig. 3a, user identifier data (e.g. UUID data)) transmitted from a user device (10_1, 10_2, ..., 10_N) to the user data server (2a), and in some embodiments to the channel generator server (3a), may be referred to herein as "User Data", and are represented on Fig. 3a by a flow (13a) representing one or more flows originated from one or more of the user devices (10_1, 10_2, ..., 10_N), respectively, and transmitted to the user data server (2a).

As shown on Fig. 3c, a linear service (14), for example for distribution in linear mode of a sequence of programs ("Program x" followed by "Program y", then followed by "Program z") may be delivered to one or more user devices (10_1, 10_2, ..., 10_N). A user of a user device (10_1, 10_2, ..., 10_N) may initiate a request for a personalized service on the user device, by inserting in the sequence of programs ("Program x" followed by "Program y", then followed by "Program z") one or more personalized programs ("Program A" for user with UUID#1, "Program B" for user with UUID#2, ..., "Program C" for user with UUID#N). The user device may be configured to generate a request for a personalized service based on a user identifier (e.g. respective Universally Unique Identifiers (UUID) UUID#1, UUID#2, and UUID#N of users of user devices 10_1, 10_2, ..., 10_N) associated with the user, and to transmit the request to the data server (2c). The request for a personalized service may comprise user identifier data, such as, for example, a UUID of the user.

The data server (2c) may be configured to store user preferences related to content delivered to user devices (10_1, 10_2, ..., 10_N), and may store, in some embodiments, user preferences associated with user identifiers (e.g. respective Universally Unique Identifiers (UUID) UUID#1, UUID#2, and UUID#N of users of user devices 10_1, 10_2, ..., 10_N).

The user data server (2c) may further be configured for, upon receipt of a request for a personalized or customized multimedia content delivery service from a user device, generating, based on the user identifier associated with the request, data related to user preferences associated with the identifier of the user (e.g. the UUID) using the user device from which the request originated, and transmitting such data to the channel generator server (3c), so that a personalized linear service channel be generated for the user device in response to the request by inserting, based on the user identifier associated with the request, one or more personalized programs for the user of the user device in the common linear service channel distributed to the user devices (10_1, 10_2, ..., 10_N).

The channel generator server (3c) may be configured for, upon receipt of the data related to the user preferences from the user data server (2c), generating, for the user corresponding to the user preferences (e.g. in association with the UUID corresponding to the user of the user device from which the request originated), a personalized service data flow carrying a personalized channel in which one or more personalized program content has been dynamically inserted into the flow carrying the sequence of programs ("Program x" followed by "Program y", then followed by "Program z"), for example by replacing a program (e.g. "Program y") of the sequence of programs x, y, z with a personalized program content.

For example, the channel generator server (3a) may be configured to generate a multimedia content channel carried by the personalized service media data flow based on multimedia content retrieved from the multimedia content database and server (4) (e.g. ("Program x" followed by "Program y", then followed by "Program z") and personalized content ("Program A" for user with UUID#1, "Program B" for user with UUID#2, ..., "Program C" for user with UUID#N) retrieved e.g. from the advertisement content database and server (5). For example, a personalized service media data flow may be generated by replacing in the flow carrying the sequence of programs x, y, z one of the programs (e.g. "Program y") with a personalized program content ("Program A" for user with UUID#1, "Program B" for user with UUID#2, ..., "Program C" for user with UUID#N), thereby creating the personalized service media data flow with a personalized sequence of programs comprising "Program X", followed by personalized content ("Program A" for user with UUID#1, "Program B" for user with UUID#2, ..., "Program C" for user with UUID#N), followed by "Program Z".

In addition, the channel generator server (3b) may be configured for registering with a DVB-I server (7) the personalized service that was created for the user device.

The DVB-I server (7) may be configured for storing, for each user identifier, a list of one or more personalized services that are available to the user corresponding to the identifier.

A user of one of the user devices (10_1, 10_2, ..., 10_N) may initiate the generation of one or more DVB-I queries (e.g. in the form of one or more HTTP requests), such as, for example, a Service List Query or a Service List Discovery Query comprising a customization parameter according to embodiments of the present subject disclosure, to be transmitted to the DVB-I server (7) for discovery of the user's personalized service(s) (such as the user's personalized FAST channel(s)). The DVB-I server (7) may be configured to respond to such requests with data (e.g. in XML format) describing the service(s) or list(s) of services that are available for the user profile indicated in a DVB-I query.

Therefore, the system (1c) of Fig. 3c provides another example of an improved DVB-I framework according to embodiments of the present subject disclosure for providing personalized services to users, including for providing users with the ability to discover per-user personalized linear channels that are made available to them by their content provider. Users can therefore advantageously discover personalized content that may be made available to them through existing linear channels, and watch existing linear channels in which personalized content has been inserted.

In some embodiments, a new channel corresponding to the existing linear channel in which personalized content has been inserted may be created, and discoverable through a query (e.g. a DVB-I query) according to embodiments of the present subject disclosure.

In some embodiments, instead of creating a new channel, and existing channel can therefore be personalized, and the user may advantageously discover available personalized services through use of a query (e.g. a DVB-I query) according to embodiments of the present subject disclosure.

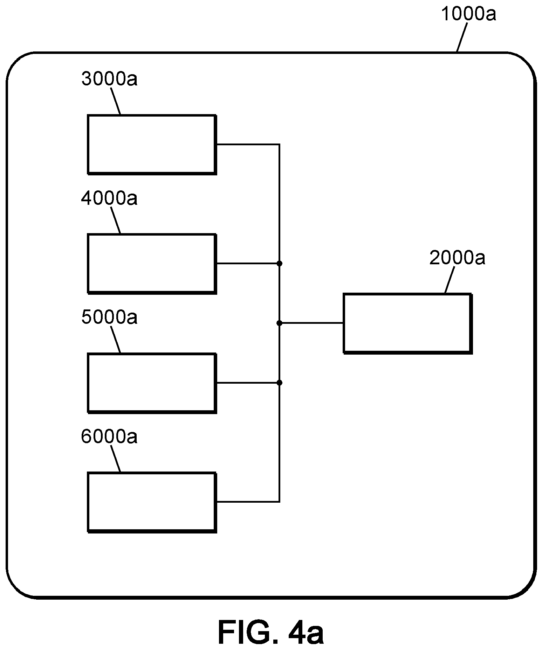

Fig. 4a illustrates an exemplary apparatus 1000a configured to use a multimedia data delivery feature in accordance with embodiments of the present subject disclosure. The apparatus 1000a may, depending on the embodiment, be comprised in a server node of a multimedia content distribution network, in a server platform which comprises one or more servers (which may be cloud-based), or in a DVB-I server unit of a server node of a multimedia content distribution network, or of a server platform.

The apparatus 1000a, which may comprise one or more computers, includes a control engine 2000a, query processing engine 3000a, a data interface engine 4000a, a response processing engine 5000a, and a memory 6000a.

In the architecture illustrated on Fig. 4a, all of the query processing engine 3000a, data interface engine 4000a, response processing engine 5000a, and memory 6000a are operatively coupled with one another through the control engine 2000a.

In one or more embodiments, the query processing engine 3000a may be configured to perform various functions or embodiments provided in the present subject disclosure of the proposed method for delivering multimedia data to a user device of a multimedia data delivery system as described herein, including with respect to receiving, from a user device, a query message requesting service list data, wherein the query message includes a parameter for querying custom service list data in relation to a user of the user device. In some embodiments, the query processing engine 3000a may be implemented in software and incorporated in a computing machine running on a server device, for example in one or more of a DVB-I Service List Registry function and DVB-I Service List Server function implemented on a DVB-I server, configured according to embodiments of the present subject disclosure.

In one or more embodiments, the response processing engine 5000a may be configured to perform various functions or embodiments provided in the present subject disclosure of the proposed method for delivering multimedia data to a user device of a multimedia data delivery system as described herein, including with respect to generating, upon receiving a query message that includes a parameter for querying custom service list data in relation to a user of the user device, a response message which includes a list of multimedia services customized for the user based on the parameter, for transmission to the user device. In some embodiments, the response processing engine 5000a may be implemented in software and incorporated in a computing machine running on a server device, for example in one or more of a DVB-I Service List Registry function and DVB-I Service List Server function implemented on a DVB-I server, according to embodiments of the present subject disclosure.

In some embodiments, the data interface engine 4000a is configured to receive as input data query messages requesting service list data from one or more user devices, and for transmitting response messages to the one or more user devices.

The control engine 2000a includes a processor, which may be any suitable microprocessor, microcontroller, Field Programmable Gate Arrays (FPGA), Application Specific Integrated Circuits (ASIC), Digital Signal Processing chip, and/or state machine, or a combination thereof. According to various embodiments, one or more of the computers can be configured as a multi-processor computer having multiple processors for providing parallel computing. The control engine 2000a may also comprise, or may be in communication with, computer storage media, such as, without limitation, the memory 6000a, capable of storing computer program instructions or software code that, when executed by the processor, causes the processor to perform the elements described herein. In addition, the memory 6000a may be any type of data storage computer storage medium, capable of storing multimedia content data, service data, service list data, customization data, personalization data and/or channel data for use according to one or more embodiments of the present subject disclosure, coupled to the control engine 2000a and operable with the data interface engine 4000a, response processing engine 5000a, and the query processing engine 3000a to facilitate management and processing of resource data stored in association therewith.

In embodiments of the present subject disclosure, the apparatus 1000a is configured for performing the computational resource allocation methods described herein.

It will be appreciated that the apparatus 1000a shown and described with reference to Fig. 4a is provided by way of example only. Numerous other architectures, operating environments, and configurations are possible. Other embodiments of the node may include fewer or greater number of components, and may incorporate some or all of the functionality described with respect to the apparatus components shown in Fig. 4a. Accordingly, although the control engine 2000a, query processing engine 3000a, data interface engine 4000a, response processing engine 5000a, and memory 6000a are illustrated as part of the apparatus 1000a, no restrictions are placed on the location and control of components 2000a - 6000a. In particular, in other embodiments, components 2000a - 6000a may be part of different entities or computing systems.

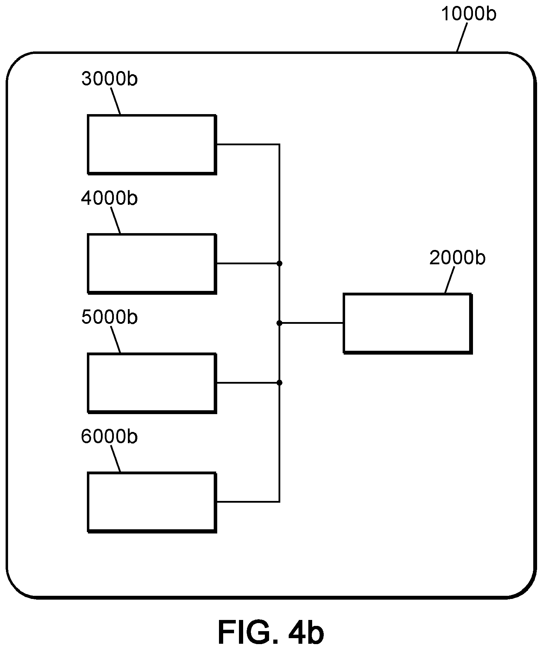

Fig. 4b illustrates an exemplary apparatus 1000b configured to use a multimedia data delivery management feature in accordance with embodiments of the present subject disclosure. The apparatus 1000b may, depending on the embodiment, be comprised in a user device of a multimedia content distribution network, in a player implemented on such a user device, or in a DVB-I client implemented on a user device (e.g. on the player of a user device) of a multimedia content distribution network.

The apparatus 1000b, which may comprise one or more computers, includes a control engine 2000b, query generation engine 3000b, a data interface engine 4000b, a response processing engine 5000b, and a memory 6000b.

In the architecture illustrated on Fig. 4b, all of the query generation engine 3000b, data interface engine 4000b, response processing engine 5000b, and memory 6000b are operatively coupled with one another through the control engine 2000b.

In one or more embodiments, the query generation engine 3000b may be configured to perform various functions or embodiments provided in the present subject disclosure of the proposed method for managing delivery of multimedia data to a user device of a multimedia data delivery system as described herein, including with respect to generating a query message requesting service list data, wherein the query message includes a parameter for querying custom service list data in relation to a user of the user device. In some embodiments, the query generation engine 3000b may be implemented in software and incorporated in a computing machine running on a user device, for example in a DVB-I client implemented on a user device, configured according to embodiments of the present subject disclosure.

In one or more embodiments, the response processing engine 5000b may be configured to perform various functions or embodiments provided in the present subject disclosure of the proposed method for managing delivery of multimedia data to a user device of a multimedia data delivery system as described herein, including with respect to receiving, from a server device, a response message which includes a list of multimedia services customized for the user, and processing the received list. In some embodiments, the response processing engine 5000b may be implemented in software and incorporated in a computing machine running on a user device, for example in a DVB-I client implemented on a user device, configured according to embodiments of the present subject disclosure.

In some embodiments, the data interface engine 4000b is configured to transmit query messages generated by the query generation engine 3000b to a server device, and to receive response messages in response to transmitted query messages.

The control engine 2000b includes a processor, which may be any suitable microprocessor, microcontroller, Field Programmable Gate Arrays (FPGA), Application Specific Integrated Circuits (ASIC), Digital Signal Processing chip, and/or state machine, or a combination thereof. According to various embodiments, one or more of the computers can be configured as a multi-processor computer having multiple processors for providing parallel computing. The control engine 2000b may also comprise, or may be in communication with, computer storage media, such as, without limitation, the memory 6000b, capable of storing computer program instructions or software code that, when executed by the processor, causes the processor to perform the elements described herein. In addition, the memory 6000a may be any type of data storage computer storage medium, capable of storing multimedia content data, service data, service list data, customization data, personalization data and/or channel data for use according to one or more embodiments of the present subject disclosure, coupled to the control engine 2000b and operable with the data interface engine 4000b, response processing engine 5000b, and the query generation engine 3000b to facilitate management and processing of resource data stored in association therewith.

In embodiments of the present subject disclosure, the apparatus 1000b is configured for performing the computational resource allocation methods described herein.

It will be appreciated that the apparatus 1000b shown and described with reference to Fig. 4b is provided by way of example only. Numerous other architectures, operating environments, and configurations are possible. Other embodiments of the node may include fewer or greater number of components, and may incorporate some or all of the functionality described with respect to the apparatus components shown in Fig. 4b. Accordingly, although the control engine 2000b, query generation engine 3000b, data interface engine 4000b, response processing engine 5000b, and memory 6000b are illustrated as part of the apparatus 1000b, no restrictions are placed on the location and control of components 2000b - 6000b. In particular, in other embodiments, components 2000b - 6000b may be part of different entities or computing systems.

While the invention has been described with respect to preferred embodiments, those skilled in the art will readily appreciate that various changes and/or modifications can be made to the invention without departing from the spirit or scope of the invention as defined by the appended claims.

Although this invention has been disclosed in the context of certain preferred embodiments, it should be understood that certain advantages, features and aspects of the systems, devices, and methods may be realized in a variety of other embodiments. Additionally, it is contemplated that various aspects and features described herein can be practiced separately, combined together, or substituted for one another, and that a variety of combination and sub-combinations of the features and aspects can be made and still fall within the scope of the invention. Furthermore, the systems and devices described above need not include all of the modules and functions described in the preferred embodiments.

Information and signals described herein can be represented using any of a variety of different technologies and techniques. For example, data, instructions, commands, information, signals, bits, symbols, and chips can be represented by voltages, currents, electromagnetic waves, magnetic fields or particles, optical fields or particles, or any combination thereof.

Depending on the embodiment, certain acts, events, or functions of any of the methods described herein can be performed in a different sequence, may be added, merged, or left out all together (e.g., not all described acts or events are necessary for the practice of the method). Moreover, in certain embodiments, acts or events may be performed concurrently rather than sequentially.

## Claims

1. A method for delivering multimedia data to a user device of a multimedia data delivery system, the method comprising, by a server device of the multimedia data delivery system,
receiving, from the user device, a query message requesting service list data, wherein the query message includes a parameter for querying custom service list data in relation to a user of the user device; and
upon receiving the query message, generating a response message which includes a list of multimedia services customized for the user based on the parameter, for transmission to the user device.

2. The method of claim 1, further comprising: transmitting, to the user device, the response message.

3. A method for managing delivery of multimedia data to a user device of a multimedia data delivery system, the method comprising, by the user device,
generating a query message requesting service list data, wherein the query message includes a parameter for querying custom service list data in relation to a user of the user device; and
transmitting the query message to a server device of the multimedia data delivery system.

4. The method of claim 3, further comprising: receiving, from the server device, a response message which includes a list of multimedia services customized for the user.

5. The method of any of the preceding claims, wherein the parameter includes an identifier related to the user device.

6. The method of any of the preceding claims, wherein the parameter includes a Universally Unique Identifier, UUID.

7. The method of any of the preceding claims, wherein the parameter includes a group identifier.

8. The method of any of the preceding claims, wherein the parameter includes a user device identifier.

9. The method of any of the preceding claims, wherein the parameter includes a user profile identifier.

10. The method of any of the preceding claims, wherein the multimedia data delivery system includes a Digital Video Broadcasting - Internet, DVB-I, system, and the query message is a DVB-I Service List Discovery Query message to query from a DVB-I Service List Registry function a personalized list of Service List Entry Points, or a DVB-I Service List Query message to query from a DVB-I Service List Server a personalized Service List.

11. The method of any of the preceding claims, wherein the user device implements a Digital Video Broadcasting - Internet, DVB-I, client, and the query message is a DVB-I query.

12. The method of claim 11, wherein the query message is a DVB-I Service List Query or Service List Discovery Query.

13. The method of any of the preceding claims, wherein the server device implements a Digital Video Broadcasting - Internet, DVB-I, Service List Registry, SLR, function or a DVB-I Service List Server, SLS, function, and the response message is a response message to a DVB-I Service List Discovery Query issued by a DVB-I client to the SLR function, or a response message to a DVB-I Service List Query issued by the DVB-I client to the SLS function.

14. An apparatus, the apparatus comprising a processor and a memory operatively coupled to the processor, wherein the apparatus is configured to perform a method according to any of claims 1 to 13.

15. A computer program product comprising computer program code tangibly embodied in a computer readable medium, said computer program code comprising instructions to, when provided to a computer system and executed, cause said computer to perform a method according to any of claims 1 to 13.
